Europäisches Patentamt

(19) European Patent Office

Office européen des brevets

(11) Publication number: **0 067 639**
A2

(12) # EUROPEAN PATENT APPLICATION

(21) Application number: 82302927.7

(22) Date of filing: 08.06.82

(51) Int. Cl.³: **B 60 B 35/16**
F 01 M 1/00

(30) Priority: 11.06.81 GB 8118000

(43) Date of publication of application:
22.12.82 Bulletin 82/51

(84) Designated Contracting States:
BE DE FR GB IT NL SE

(71) Applicant: GKN AXLES LIMITED
Old Bromford Lane
Ward End B8 2RQ(GB)

(72) Inventor: Russell, Peter John
1 The Windings
Lichfield Staffs. WS13 7EX(GB)

(72) Inventor: Ensor, David Frederick
11 Lomond Close Coton Green
Tamworth Staffs.(GB)

(74) Representative: Dodd, Graham Marshall et al,
Guest Keen & Nettlefolds Plc. Group Patents and
Licensing Department PO Box 55 Cranford Street
Smethwick Warley West Midlands B66 2RZ(GB)

(54) Axles.

(57) An axle with a housing and a removable cover member which affords an internal chamber with an entrance for receiving oil thrown by gearing within the housing when in use and an exit sufficiently small to ensure that when in use the chamber the remains substantially full of oil. Cooling of the oil within the chamber by conduction through the wall of the cover member is facilitated.

0067639

P81.020/GMD                    Axles

This invention relates to axles for motor vehicles, incorporating a housing containing a differential gearing and, typically, a bevel or hypoid gear set.

It is usual to arrange for lubrication of the gearing in an axle by having the housing contain a quantity of oil. In use, such oil becomes heated, and under some conditions of operation the temperature of the oil can become sufficiently high for there to be a risk of lubrication failure. One reason for such heating is power loss due to churning of the oil by the gearing. The effect is aggravated if the axle is installed in a vehicle where there is not a great flow of air over the housing of the axle when the vehicle is in motion. It is possible to equip an axle with a pump by which lubricant is circulated through an external cooling means, but this is complex and expensive. It is the object of the invention to overcome or reduce the problem described, in a relatively simple manner.

According to the present invention, we provide an axle including a housing containing gearing means, a quantity of oil for lubrication thereof, and a removable cover member characterised in that said cover member has an external heat transfer surface and there is provided means for causing the oil to remain in contact with the internal surface of said cover member sufficiently to be cooled thereby.

The cover member may afford a chamber with said internal surface forming a boundary thereof, said chamber having an entrance and an exit with said entrance being positioned to receive oil impelled by the gearing means when in use and said exit being at or adjacent the bottom of said chamber and of dimension such that in normal use said chamber contains a quantity of oil.

In use, the retention of a quantity of oil in said chamber, with continuous slow draining and replenishment thereof, means that the oil in the chamber is in contact with the internal surface of the cover member for a period of time longer than if it merely splashed on to the cover member and immediately ran off. This enhances cooling of the oil. A further advantage arises from the fact that when not in use the chamber drains and so raises the static level of the oil within the axle housing. This assists lubrication when starting from rest, without the attendant disadvantage of excessive churning of the oil which can occur when the level is high in use as well as at rest.

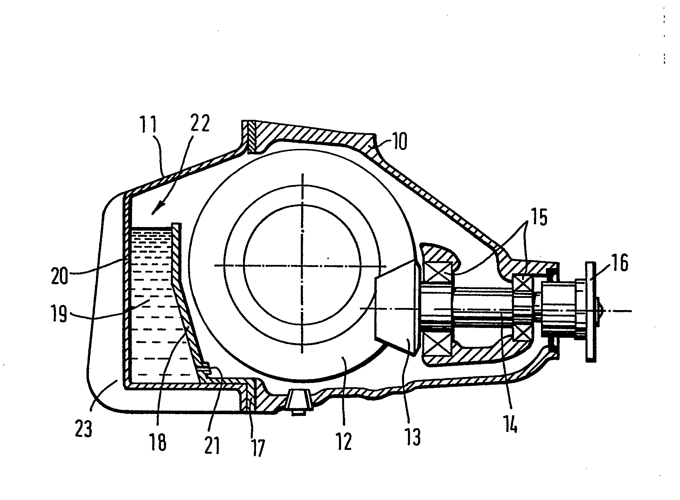

The invention will now be described by way of example with reference to the accompanying drawing, which is a diagrammatic cross-section through an axle embodying the invention.

The illustrated axle comprises a casing 10 with a removable rear cover member 11. The casing contains a hypoid crown wheel and pinion gear set 12, 13 providing for drive from an input element 14 to output elements in the form of two half shafts, not shown, connected to the crown wheel 12 through a differential gearing, also not shown. The input element 14 is supported by spaced bearings 15 within the housing, and has a flange 16 for attachment of a universal joint and shaft.

A member 17 is received between the cover member 11 and the housing 10, and affords the front wall 18 of a chamber 19 the rear wall 20 of which is constituted by the cover member. The wall 18 has a relatively small aperture 21 towards the bottom thereof which provides an exit from the chamber, the top of the chamber having an open entrance 22 in a position to receive oil thrown about by the crown wheel 12 and differential gearing when the axle assembly is in use.

3

The exit 21 from the chamber 19 is so dimensioned that when in use the rate at which oil drains from the chamber through it is less than the rate at which oil enters the entrance 22. Thus, in use, the chamber 19 remains substantially full of oil, which assists cooling of the oil by conduction through the wall 20 of the cover member 11. A further advantage is that the oil level in the main part of the housing 10 is lowered, reducing losses and heating of the oil due to excessive churning thereof by the crown wheel and differential gearing. When the assembly is at rest, however, the chamber 19 drains which raises the static oil level in the housing and ensures lubrication under start up conditions for highly stressed parts like the pinion 13 and bearings 15.

The wall 20 may be provided with cooling fins 23 further to increase the cooling effect on the oil.

Because the chamber 19 is defined by the rear cover member 11 and member 17, the same design of casing 10 could be employed with alternative designs of cover member, for example if the extra oil cooling afforded by chamber 19 is not required. It is easy to provide axles suitable for different installations without requiring changes in the design of casing 10.

CLAIMS

1.   An axle including a housing (10) containing gearing means (12, 13), a quantity of oil for lubrication thereof, and a removable cover member (11) characterised in that said cover member (11) has an external heat transfer surface (20) and there is provided means (17, 18, 19) for causing the oil to remain in contact with the internal surface of said cover member sufficiently to be cooled thereby.

2.   An axle according to Claim 1 further characterised by means (17, 18) defining a chamber (19) with said internal surface forming a boundary thereof, said chamber (19) having an entrance (22) and an exit (21), said entrance (22) being positioned to receive oil impelled by the gearing means (12, 13) when in use and said exit (21) being at or adjacent the bottom of said chamber (19) and of a dimension such that in use said chamber (19) contains a quantity of oil.

3.   An axle according to Claim 1 or Claim 2 further characterised in that said external surface (20) of said cover member (11) is provided with fins (23).

4.   An axle according to any one of the preceding claims further characterised in that said chamber (19) is defined between said cover member (11) and an intermediate member (17, 18) between said cover member (11) and housing (10).